# EUROPEAN PATENT APPLICATION

(11) **EP 4 693 123 A1**
(43) Date of publication of application: **11.02.2026**
(21) Application number: 23930487.6
(22) Date of filing: 29.03.2023
(51) Int. Cl.: G06Q 10/04, G06Q 10/06, G06Q 50/04, G06Q 50/00, G06F 30/27, G06N 20/00, G06N 20/10, G06N 7/01, G06Q 10/10, G06N 3/08, G06Q 10/30, G06N 5/022

(54) **BIOMASS USE ASSISTANCE DEVICE, METHOD, AND PROGRAM**

(71) Applicant: Resonac Corporation, Tokyo 105-7325 (JP)
(72) Inventor: CHEN, Li-Hsin, Tokyo 105-8518 (JP); MOROSAKI, Tomohito, Tokyo 105-8518 (JP); FUKUHARA, Kiichi, Tokyo 105-8518 (JP)
(74) Representative: Hoffmann Eitle
(86) International application number: PCT/JP2023/013002
(87) International publication number: WO 2024/201849

(57) **Abstract**

A biomass utilization support device: acquires biomass information relating to a biobased material and product information for each of a plurality of products including information about materials configuring the products; uses a machine learning model, which has been trained to estimate appropriate values for replacement amounts in a case of replacing a portion of the materials configuring the products with the biobased material, and the acquired biomass information and product information to estimate the appropriate values for each of the plurality of products; calculates, for each of the plurality of products, environmental impact indicators in a case in which a portion of the materials configuring the products has been replaced with the biobased material at the replacement amounts represented by the estimated appropriate values; and outputs support information listing the estimated appropriate values and the calculated environmental impact indicators.

## Description

### Technical field

This disclosure relates to a biomass utilization support device, a biomass utilization support method, and a biomass utilization support program.

### Background art

The problem of global warming in recent years has led to a demand for carbon neutrality in product production. For example, the utilization of biological resources (biomass) as materials for products is being promoted.

As a technology relating to the utilization of biomass, a biomass effective utilization support system that can efficiently process biomass has been proposed. This system inputs the type and input amount of input biomass selected from the group comprising sewage sludge, livestock waste, waste wood, kitchen waste, and other waste. Furthermore, this system registers in advance unique characteristic data that devices including pretreatment devices, anaerobic digesters, dehydrators, heat exchangers, incinerators, and generators have, selects at least one from among the registered devices, and constructs a biomass processing flow. Additionally, this system calculates at least one of the quality of wastewater that will occur and the amount of waste that will be generated in a case in which the biomass is processed by the set device configuration and processing flow, the amount of biogas generated, the amount of energy that can be recovered or the amount of power generating energy that can be generated from the biogas, and running costs required to operate the processing facility.

### Citation list

### Patent Literature

Patent Literature 1: JP-A No. 2021-149905

### SUMMARY OF INVENTION

### Technical Problem

Available biobased materials vary greatly in their physical properties, such as their levels of impurities, making it difficult to determine appropriate applications on a case-by-case basis.

It is an object of this disclosure to provide a biomass utilization support device, method, and program that can support determinations about appropriate applications for biobased materials.

### Solution to Problem

In order to achieve the above object, a biomass utilization support device pertaining to this disclosure includes: an acquisition unit that acquires biomass information relating to a biobased material and product information for each of a plurality of products including information about materials configuring the products; an estimation unit that uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products; a calculation unit that calculates, for each of the plurality of products, environmental impact indicators in a case in which a portion of the materials configuring the products has been replaced with the biobased material at the replacement amounts represented by the appropriate values estimated by the estimation unit; and an output unit that outputs, for each of the plurality of products, support information listing the appropriate values estimated by the estimation unit and the environmental impact indicators calculated by the calculation unit. Because of this, determinations about appropriate applications for biobased materials can be supported.

Furthermore, the estimation unit may use the machine learning model, which has been trained using a plurality of training data including the replacement amounts and characteristic values representing characteristics of the products in a case in which a portion of the materials configuring the products has been replaced with the biobased material, and with multiple values being assigned for the replacement amounts, to estimate, as the appropriate values for each of the plurality of products, the replacement amounts with which the characteristic values in a case in which multiple values have been assigned for the replacement amounts become equal to or greater than a threshold value or the replacement amounts corresponding to a top predetermined number of the characteristic values. Furthermore, the estimation unit may estimate, as the appropriate values, the replacement amounts that achieve the best characteristic values in a case in which multiple values have been assigned for the replacement amounts. Because of this, support information can be easily acquired for biobased materials whose material quality is not stable.

Furthermore, the biomass information includes physical property values of the biobased material and a biomass content that is the ratio of biomass relative to an entirety of the biobased material, and the product information includes composition ratios of the materials configuring the products.

Furthermore, the calculation unit may calculate, as the environmental impact indicators, carbon dioxide emissions that will be reduced in a case in which a portion of the materials has been replaced with the biobased material. Because of this, a product that is highly effective at reducing carbon dioxide emissions can be selected as an application for the biobased material.

Furthermore, the biomass utilization support device pertaining to this disclosure may include a collection unit that collects related information from the internet for each of the plurality of products based on keywords extracted from the biomass information and the product information acquired by the acquisition unit, and the output unit may apply the related information collected by the collection unit to the support information for each of the plurality of products and outputs the support information. Furthermore, the related information may be information relating to environmental impacts included in patent documents or policies. Because of this, a product serving as an application for the biobased material can be selected with reference also to the related information.

Furthermore, a biomass utilization support method pertaining to this disclosure is a biomass utilization support method executed by a biomass utilization support device including an acquisition unit, an estimation unit, a calculation unit, and an output unit, wherein: the acquisition unit acquires biomass information relating to a biobased material and product information for each of a plurality of products including information about materials configuring the products; the estimation unit uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products; the calculation unit calculates, for each of the plurality of products, environmental impact indicators in a case in which a portion of the materials configuring the products has been replaced with the biobased material at the replacement amounts represented by the appropriate values estimated by the estimation unit; and the output unit outputs, for each of the plurality of products, support information listing the appropriate values estimated by the estimation unit and the environmental impact indicators calculated by the calculation unit.

Furthermore, a biomass utilization support program pertaining to this disclosure is a biomass utilization support program for causing a computer to function as: an acquisition unit that acquires biomass information relating to a biobased material and product information for each of a plurality of products including information about materials configuring the products; an estimation unit that uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products; a calculation unit that calculates, for each of the plurality of products, environmental impact indicators in a case in which a portion of the materials configuring the products has been replaced with the biobased material at the replacement amounts represented by the appropriate values estimated by the estimation unit; and an output unit that outputs, for each of the plurality of products, support information listing the appropriate values estimated by the estimation unit and the environmental impact indicators calculated by the calculation unit.

### Advantageous Effects of Invention

According to the biomass utilization support device, method, and program pertaining to this disclosure, determinations about appropriate applications for biobased materials can be supported.

### BRIEF DESCRIPTION OF THE DRAWINGS

FIG. 1 is a block diagram showing hardware configurations of a biomass utilization support device.
FIG. 2 is a block diagram showing an example of functional configurations of the biomass utilization support device.
FIG. 3 is a drawing showing an example of a material DB.
FIG. 4 is a drawing showing an example of a product DB.
FIG. 5 is a drawing showing an example of support information that is output.
FIG. 6 is a flowchart showing an example of a biomass utilization support process.

### DESCRIPTION OF EMBODIMENT

An example of an embodiment will be described below with reference to the drawings.

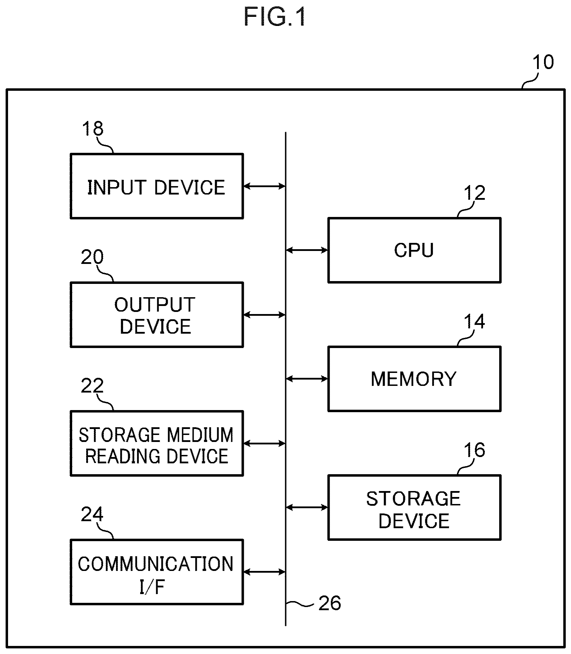

FIG. 1 is a block diagram showing hardware configurations of a biomass utilization support device 10. As shown in FIG. 1, the biomass utilization support device 10 has a central processing unit (CPU) 12, a memory 14, a storage device 16, an input device 18, an output device 20, a storage medium reading device 22, and a communication interface (I/F) 24. These configurations are communicably connected to each other via a bus 26.

The storage device 16 stores a biomass utilization support program for executing processes relating to a biomass utilization support method described below. The CPU 12 is a central arithmetic processing unit, executes various types of programs, and controls each configuration. That is, the CPU 12 reads programs from the storage device 16 and executes the programs using the memory 14 as a workspace. The CPU 12 controls each of the above configurations and performs various types of arithmetic processing in accordance with the programs stored in the storage device 16.

The memory 14 is configured by a random-access memory (RAM) and temporarily stores programs and data as a workspace. The storage device 16 is configured by a read-only memory (ROM), a hard disk drive (HDD), or a solid-state drive (SSD) and stores various types of programs, including an operating system, and various types of data.

The input device 18 is a device for performing various types of input, such as a keyboard and a mouse, for example. The output device 20 is a device for outputting various types of information, such as a display and a printer, for example. A touch panel display may be employed for the output device 20, thus allowing it to also function as the input device 18.

The storage medium reading device 22 reads data stored in various types of storage media, such as compact disc (CD)-ROMs, digital versatile disc (DVD)-ROMs, Blu-ray discs, and universal serial bus (USB) memories, and writes data to the storage media. The communication I/F 24 is an interface for communicating with other devices and uses a standard such as Ethernet (registered trademark), FDDI, or Wi-Fi (registered trademark).

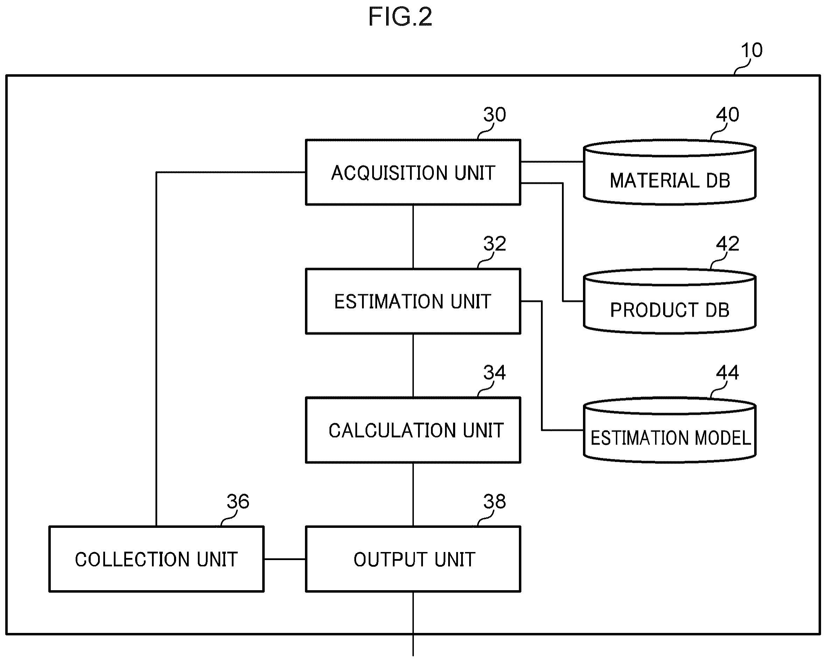

Next, functional configurations of the biomass utilization support device 10 will be described. FIG. 2 is a block diagram showing an example of the functional configurations of the biomass utilization support device 10. As shown in FIG. 2, the biomass utilization support device 10 includes, as functional configurations, an acquisition unit 30, an estimation unit 32, a calculation unit 34, a collection unit 36, and an output unit 38. Furthermore, a material database (DB) 40, a product DB 42, and an estimation model 44 are stored in a predetermined storage region in the biomass utilization support device 10. Each functional configuration is realized by the CPU 12 reading the biomass utilization support program stored in the storage device 16, loading it to the memory 14, and executing it.

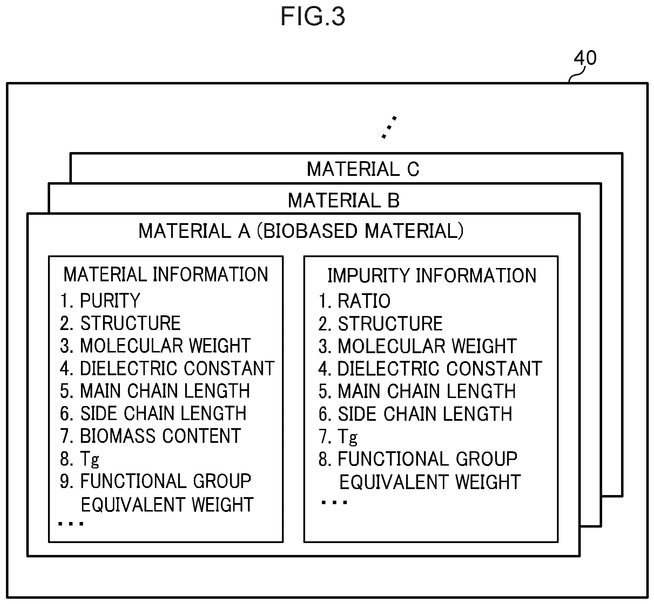

The material DB 40 stores material information relating to various types of materials including biobased materials. In a case in which the material is a biobased material, the material information is an example of biomass information of this disclosure. The material information relating to the biobased materials includes physical property values of the biobased materials, such as functional group equivalent weight and structure, and biomass content, which is the ratio of biomass to an entirety of the biobased material. The material information also includes purity, molecular weight, dielectric constant, main chain length, side chain length, and glass transition temperature (Tg), for example. Furthermore, the material information also includes impurity information representing information about impurities included in the materials. The impurity information includes the ratio of impurities included in the materials in addition to information similar to the material information described above. FIG. 3 shows an example of the material DB 40.

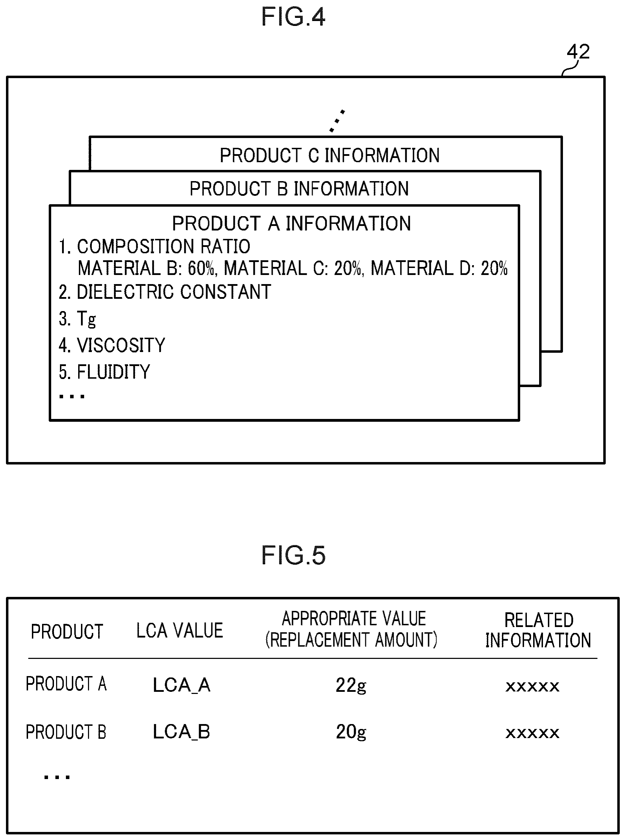

The product DB 42 stores product information for each of a plurality of products including information about materials configuring the products and specifically their composition ratios. Furthermore, the product information also includes product characteristics such as dielectric constant, Tg, viscosity, and fluidity. FIG. 4 shows an example of the product DB 42.

The acquisition unit 30 receives a designation of a biobased material to be utilized and acquires the material information about the designated biobased material from the material DB 40. Furthermore, the acquisition unit 30 acquires the product information about each of the products from the product DB 42 and acquires the material information about the materials configuring those products from the material DB 40.

It will be noted that the material DB 40 and the product DB 42 are not limited to being stored in the biomass utilization support device 10 and may be stored in an external storage device or the like. In that case, the acquisition unit 30 accesses the external storage device or the like to acquire the material information and the product information.

The estimation unit 32 uses the estimation model 44 and the material information and the product information acquired by the acquisition unit 30 to estimate, for each of the plurality of products, appropriate values for replacement amounts in a case in which a portion of the materials configuring the product is replaced with the biobased material. The estimation model 44 is, for example, a machine learning model configured by a neural network or the like. The estimation model 44 is trained to estimate the appropriate values based on the material information and the product information.

Specifically, the estimation model 44 is trained in advance using a plurality of training data including the replacement amounts and characteristic values representing characteristics of the products in a case in which a portion of the materials configuring the products has been replaced with the biobased material, and with multiple values being assigned for the replacement amounts. The training data are prepared in advance by experiment. Additionally, the estimation unit 32 uses the material information and the product information to create, for each of the plurality of products, input data including the composition ratios of the products in a case in which multiple values have been assigned for the replacement amounts, and inputs the input data to the estimation model 44 to thereby estimate the characteristic values for each replacement amount. The estimation unit 32 estimates, as the appropriate values, the replacement amounts with which the estimated characteristic values become equal to or greater than a threshold value or the replacement amounts corresponding to a top predetermined number of the characteristic values. In a case in which the top predetermined number is one, the estimation unit 32 estimates, as the appropriate values, the replacement amounts that achieve the best characteristic values.

The calculation unit 34 uses the material information and the product information to calculate, for each of the plurality of products, life cycle assessment (LCA) values in a case in which a portion of the materials configuring the products is replaced with the biobased material at the replacement amounts represented by the appropriate values estimated by the estimation unit 32. The LCA values are indicators that quantitatively represent the environmental impact of the products throughout their life cycles. The calculation unit 34 for example calculates, as the LCA values, carbon dioxide emissions that will be reduced in a case in which a portion of the materials is replaced with the biobased material. More specifically, the calculation unit 34 calculates the carbon dioxide emissions before replacement based on the product information and the material information relating to the products before replacement with the biobased material. Furthermore, the calculation unit 34 calculates the carbon dioxide emissions in a case in which a portion of the materials of the products has been replaced with the biobased material at the replacement amounts represented by the appropriate values. Then, the calculation unit 34 calculates the reduction amounts by subtracting the carbon dioxide emissions after replacement from the carbon dioxide emissions before replacement.

The collection unit 36 collects related information from the internet for each of the plurality of products based on keywords extracted from the material information and the product information acquired by the acquisition unit 30. The related information is, for example, information relating to environmental impacts included in patent documents or policies. The information relating to environmental impacts is more specifically information such as LCA-related effects achieved by products with specific compositions disclosed in patent documents, information about the appropriateness of applying specific materials to the products, LCA-related effects required of products disclosed in policies, and types of materials restricted by laws and regulations.

For example, the collection unit 36 extracts product names and material names as keywords from the material information and the product information and searches the internet for documents including the extracted keywords. The collection unit 36 collects, as the related information, sentences including predetermined terms, such as effects and LCA, and sentences before and after those sentences from the searched-for documents. Furthermore, the collection unit 36 may also collect, as the related information, sentences appearing in specific sections of documents whose formats are specified in advance, such as patent documents and policies. Furthermore, the collection unit 36 may collect the related information by inputting the searched-for documents to a machine learning model that has been trained to extract, and output, appropriate parts as the related information from the input documents. Furthermore, the collection unit 36 may add information such as the document names of the searched-for documents to the related information.

The output unit 38 outputs support information listing the appropriate values estimated by the estimation unit 32, the LCA values calculated by the calculation unit 34, and the related information collected by the collection unit 36. FIG. 5 shows an example of the support information that is output.

Next, the action of the biomass utilization support device 10 pertaining to this embodiment will be described.

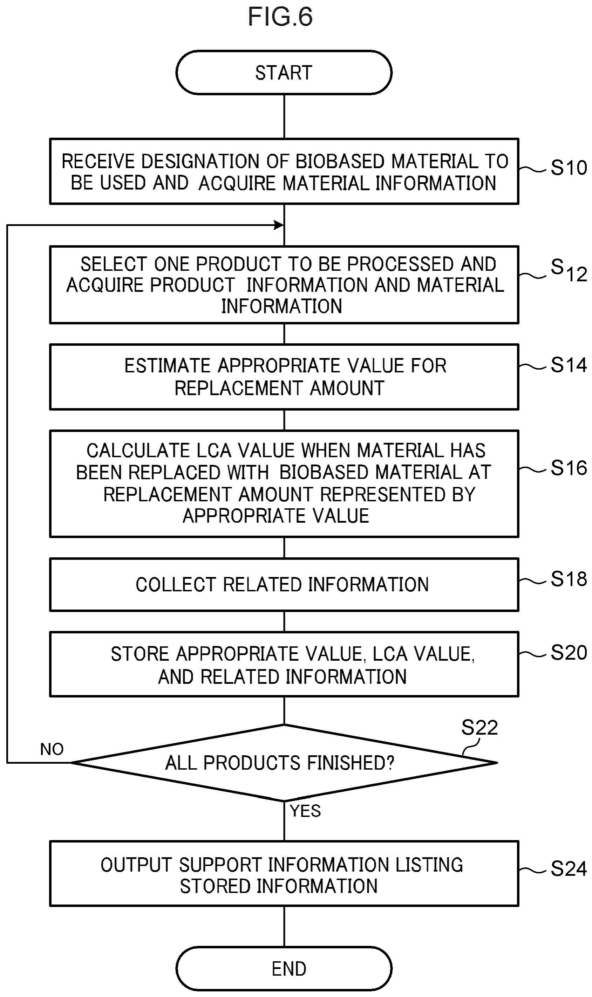

In the material DB 40 is stored the material information relating to various types of materials including biobased materials, and in the product DB 42 is stored the product information for each of the plurality of products including information about the materials configuring the products. Furthermore, the estimation model 44, which has been trained using the plurality of training data including the replacement amounts and the characteristic values representing the characteristics of the products in a case in which a portion of the materials configuring the products has been replaced with the biobased material, and with multiple values being assigned for the replacement amounts, to estimate the appropriate values for the replacement amounts, is stored in a predetermined storage region in the biomass utilization support device 10. In this state, in a case in which output of the support information is instructed, the biomass utilization support device 10 executes the biomass utilization support process shown in FIG. 6.

In step S10, the acquisition unit 30 receives a designation of a biobased material to be used and acquires the material information about the designated biobased material from the material DB 40. Next, in step S12, the acquisition unit 30 selects from the product DB 42, as a product to be processed, one product that has not been subjected to the processes of steps S14 to S20 described below and acquires the product information about the product to be processed. Furthermore, the acquisition unit 30 identifies the materials configuring the product from the composition ratio included in the acquired product information and acquires the material information about the identified materials from the material DB 40.

Next, in step S14, the estimation unit 32 uses the material information and the product information acquired in steps S10 and S12 to create, for the product to be processed, input data including the composition ratio of the product in a case in which multiple values have been assigned for the replacement amount. Then, the estimation unit 32 inputs the created input data to the estimation model 44 to estimate the characteristic value for each replacement amount; for example, it estimates as the appropriate value the replacement amount that achieves the best characteristic value.

Next, in step S16, the calculation unit 34 uses the acquired material information and product information to calculate the LCA value in a case in which a portion of the materials configuring the product to be processed has been replaced with the biobased material at the replacement amount represented by the appropriate value estimated in step S14. Next, in step S 18, the collection unit 36 collects, for the product to be processed, the related information from the internet based on keywords extracted from the acquired material information and product information.

Next, in step S20, the output unit 38 associates the appropriate value for the replacement amount that has been estimated, the LCA value that has been calculated, and the related information that has been collected with identification information for the product to be processed and temporarily stores them in a predetermined storage region.

Next, in step S22, it is determined whether the processes of steps S14 to S20 have finished for all the products whose product information is stored in the product DB 42. In a case in which there is an unprocessed product, the process returns to step S12, and in a case of processing of all the products has finished, the process moves to step S24. It will be noted that the process is not limited to targeting all the products whose product information is stored in the product DB 42, and products designated in advance may be selected as targets for processing.

In step S24, the output unit 38 creates and outputs the support information listing the product identification information, the appropriate values for the replacement amounts, the LCA values, and the related information temporarily stored in the predetermined storage region, and the biomass utilization support process ends.

As described above, the biomass utilization support device pertaining to this embodiment acquires biomass information relating to a biobased material and product information for each of a plurality of products including information about materials configuring the products. Furthermore, the biomass utilization support device uses a machine learning model, which has been trained to estimate appropriate values for replacement amounts in a case of replacing a portion of the materials configuring the products with the biobased material, and the acquired biomass information and product information to estimate the appropriate values for each of the plurality of products. Furthermore, the biomass utilization support device calculates, for each of the plurality of products, environmental impact indicators in a case in which a portion of the materials configuring the products has been replaced with the biobased material at the replacement amounts represented by the estimated appropriate values. Additionally, the biomass utilization support device outputs, for each of the plurality of products, support information listing the estimated appropriate values and the calculated environmental impact indicators. Because of this, determinations about appropriate applications for the biobased material can be supported. For example, selecting a product with the best balance between the amount replaced with the biobased material and the contribution to the LCA effect and executing replacement with the biobased material based on the output support information can both achieve an LCA effect such as reducing carbon dioxide emissions and maintain product performance.

Furthermore, the processes that the CPU executed by reading software (programs) in the above embodiment may also be executed by various types of processors other than a CPU. Examples of processors in this case include programmable logic devices (PLDs) whose circuit configuration can be changed after manufacture, such as field-programmable gate arrays (FPGAs), and dedicated electrical circuits that are processors having a circuit configuration dedicatedly designed for executing specific processes, such as application-specific integrated circuits (ASICs). Furthermore, the processes may be executed by one of these various types of processors or may be executed by a combination of two or more processors of the same type or different types (e.g., multiple FPGAs, a combination of a CPU and an FPGA, etc.). Furthermore, the hardware structures of these various types of processors are more specifically electrical circuits in which circuit elements such as semiconductor devices are combined.

Furthermore, although in the above embodiment an aspect was described where the biomass utilization support program was stored (installed) beforehand in a storage device, the program is not limited to this. The program may also be provided in a form in which it is stored in a storage medium such as a CD-ROM, a DVD-ROM, or a USB memory. Furthermore, the program may also take a form in which it is downloaded via a network from an external device.

Below, supplementary items are described.

### (Supplementary Item 1)

A biomass utilization support device comprising:
an acquisition unit that acquires biomass information relating to a biobased material and product information for each of a plurality of products including information about materials configuring the products;
an estimation unit that uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products;
a calculation unit that calculates, for each of the plurality of products, environmental impact indicators in a case in which a portion of the materials configuring the products has been replaced with the biobased material at the replacement amounts represented by the appropriate values estimated by the estimation unit; and
an output unit that outputs, for each of the plurality of products, support information listing the appropriate values estimated by the estimation unit and the environmental impact indicators calculated by the calculation unit.

### (Supplementary Item 2)

The biomass utilization support device of supplementary item 1, wherein the estimation unit uses the machine learning model, which has been trained using a plurality of training data including the replacement amounts and characteristic values representing characteristics of the products in a case in which a portion of the materials configuring the products has been replaced with the biobased material, and with multiple values being assigned for the replacement amounts, to estimate, as the appropriate values for each of the plurality of products, the replacement amounts with which the characteristic values in a case in which multiple values have been assigned for the replacement amounts become equal to or greater than a threshold value or the replacement amounts corresponding to a top predetermined number of the characteristic values.

### (Supplementary Item 3)

The biomass utilization support device of supplementary item 2, wherein the estimation unit estimates, as the appropriate values, the replacement amounts that achieve the best characteristic values in a case in which multiple values have been assigned for the replacement amounts.

### (Supplementary Item 4)

The biomass utilization support device of any one of supplementary item 1 to supplementary item 3, wherein
the biomass information includes physical property values of the biobased material and a biomass content that is the ratio of biomass relative to an entirety of the biobased material, and
the product information includes composition ratios of the materials configuring the products.

### (Supplementary Item 5)

The biomass utilization support device of any one of supplementary item 1 to supplementary item 4, wherein the calculation unit calculates, as the environmental impact indicators, carbon dioxide emissions that will be reduced in a case in which a portion of the materials has been replaced with the biobased material.

### (Supplementary Item 6)

The biomass utilization support device of any one of supplementary item 1 to supplementary item 5, wherein
the biomass utilization support device includes a collection unit that collects related information from the internet for each of the plurality of products based on keywords extracted from the biomass information and the product information acquired by the acquisition unit, and
the output unit applies the related information collected by the collection unit to the support information for each of the plurality of products and outputs the support information.

### (Supplementary Item 7)

The biomass utilization support device of supplementary item 6, wherein the related information is information relating to environmental impacts included in patent documents or policies.

### Reference signs list

- 10: Biomass Utilization Support Device
- 12: CPU
- 14: Memory
- 16: Storage Device
- 18: Input Device
- 20: Output Device
- 22: Storage Medium Reading Device
- 24: Communication I/F
- 26: Bus
- 30: Acquisition Unit
- 32: Estimation Unit
- 34: Calculation Unit
- 36: Collection Unit
- 38: Output Unit
- 40: Material DB
- 42: Product DB
- 44: Estimation Model

## Claims

1. A biomass utilization support device, comprising:
an acquisition unit that acquires biomass information relating to a biobased material and product information for each of a plurality of products including information about materials configuring the products;
an estimation unit that uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products;
a calculation unit that calculates, for each of the plurality of products, environmental impact indicators in a case in which a portion of the materials configuring the products has been replaced with the biobased material at the replacement amounts represented by the appropriate values estimated by the estimation unit; and
an output unit that outputs, for each of the plurality of products, support information listing the appropriate values estimated by the estimation unit and the environmental impact indicators calculated by the calculation unit.

2. The biomass utilization support device of claim 1, wherein the estimation unit uses the machine learning model, which has been trained using a plurality of training data including the replacement amounts and characteristic values representing characteristics of the products in a case in which a portion of the materials configuring the products has been replaced with the biobased material, and with multiple values being assigned for the replacement amounts, to estimate, as the appropriate values for each of the plurality of products, replacement amounts with which the characteristic values in a case in which multiple values that have been assigned for the replacement amounts become equal to or greater than a threshold value or replacement amounts corresponding to a top predetermined number of the characteristic values.

3. The biomass utilization support device of claim 2, wherein the estimation unit estimates, as the appropriate values, replacement amounts that achieve best characteristic values in a case in which multiple values have been assigned for the replacement amounts.

4. The biomass utilization support device of any one of claim 1 to claim 3, wherein:
the biomass information includes physical property values of the biobased material and a biomass content that is a ratio of biomass relative to an entirety of the biobased material, and
the product information includes composition ratios of the materials configuring the products.

5. The biomass utilization support device of any one of claim 1 to claim 3, wherein the calculation unit calculates, as the environmental impact indicators, carbon dioxide emissions that will be reduced in a case in which a portion of the materials has been replaced with the biobased material.

6. The biomass utilization support device of any one of claim 1 to claim 3, wherein:
the biomass utilization support device includes a collection unit that collects related information from the Internet for each of the plurality of products based on keywords extracted from the biomass information and the product information acquired by the acquisition unit, and
the output unit applies the related information collected by the collection unit to the support information for each of the plurality of products and outputs the support information.

7. The biomass utilization support device of claim 6, wherein the related information is information relating to environmental impacts included in patent documents or policies.

8. A biomass utilization support method executed by a biomass utilization support device including an acquisition unit, an estimation unit, a calculation unit, and an output unit, wherein:
the acquisition unit acquires biomass information relating to a biobased material and product information for each of a plurality of products including information about materials configuring the products;
the estimation unit uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products;
the calculation unit calculates, for each of the plurality of products, environmental impact indicators in a case in which a portion of the materials configuring the products has been replaced with the biobased material at the replacement amounts represented by the appropriate values estimated by the estimation unit; and
the output unit outputs, for each of the plurality of products, support information listing the appropriate values estimated by the estimation unit and the environmental impact indicators calculated by the calculation unit.

9. A biomass utilization support program for causing a computer to function as:
an acquisition unit that acquires biomass information relating to a biobased material and product information for each of a plurality of products including information about materials configuring the products;
an estimation unit that uses a machine learning model, which has been trained to estimate appropriate values for replacement amounts in a case of replacing a portion of the materials configuring the products with the biobased material, and the biomass information and the product information acquired by the acquisition unit to estimate the appropriate values for each of the plurality of products;
a calculation unit that calculates, for each of the plurality of products, environmental impact indicators in a case in which a portion of the materials configuring the products has been replaced with the biobased material at the replacement amounts represented by the appropriate values estimated by the estimation unit; and
an output unit that outputs, for each of the plurality of products, support information listing the appropriate values estimated by the estimation unit and the environmental impact indicators calculated by the calculation unit.
